Europäisches Patentamt

European Patent Office

Office européen des brevets

(11) Publication number: **0 086 652**
**B1**

(12) **EUROPEAN PATENT SPECIFICATION**

(45) Date of publication of patent specification: **27.04.88**

(21) Application number: **83300727.1**

(22) Date of filing: **14.02.83**

(51) Int. Cl.⁴: **B 29 C 49/12**

(54) **Apparatus for biaxial-blow-moulding a hollow bottle-shaped container of synthetic resin.**

(30) Priority: **15.02.82 JP 19485/82**

(43) Date of publication of application:
**24.08.83 Bulletin 83/34**

(45) Publication of the grant of the patent:
**27.04.88 Bulletin 88/17**

(84) Designated Contracting States:
**CH DE FR GB IT LI NL**

(56) References cited:
**DE-A-1 904 753**
**DE-A-2 521 308**
**DE-A-2 610 259**
**FR-A-2 123 491**
**FR-A-2 309 326**
**US-A-4 364 721**

(73) Proprietor: **Yoshino Kogyosho CO., LTD.**
**No 3-2-6, Ojima 3-chome, Koto-ku**
**Tokyo 136 (JP)**

(72) Inventor: **Takada, Takuzo**
**No. 3-2-6, Ojima**
**Koto-ku Tokyo (JP)**

(74) Representative: **Heath, Derek James et al**
**Bromhead & Co. 30 Cursitor Street Chancery**
**Lane**
**London EC4A 1LT (GB)**

Courier Press, Leamington Spa, England.

## Description

This invention relates to apparatus for biaxial-blow-moulding a hollow bottle-shaped container of a synthetic resin.

A conventional biaxial-blow-moulding apparatus for synthetic resin products is constructed to heat pieces or parisons of preformed injection moulded articles at a predetermined temperature, and then to blow the pieces in blowing moulds while axially orienting the pieces by means of orientation pins, thereby obtaining the products of desired shape. An example of such apparatus is shown in DE—A—25 21 308.

However, the outer surface of the product thus blow-moulded in the mould is substantially intimately contacted with the inner surface of the mould. Particularly when the product is heat-treated, the bottom surface of the product adheres to the inner bottom surface of the mould. Thus, this conventional moulding of the product has the disadvantage that it is difficult to remove the product smoothly from the mould.

It is also known from DE—A—19 04 753 to provide apparatus for biaxial-blow-moulding a hollow bottle-shaped container of a synthetic resin comprising a bottom mould having an upper surface which forms the mould surface for the bottom of the container, an axially-movable pin extending through a hole in the bottom mould and having an upper end face adapted to form part of the bottom mould surface of the bottom mould when the pin is in a retracted position, a spring or other resilient member arranged to act on that end of the pin remote from the mould cavity so as to urge the pin into a position where it protrudes beyond the upper surface of the bottom mould into the mould cavity, and a piston which is mounted for reciprocation in a cylinder provided in the bottom mould, the cylinder having air intake and exhaust holes in the bottom mould at locations on either side of the piston so as to move the piston under pneumatic pressure. This apparatus is, however, somewhat complicated, and the aim of the present invention is to provide much simpler apparatus.

With this aim in view, the piston is provided — in accordance with the invention — on the end of the pin remote from the mould so that the pin moves with the piston, and the spring or other resilient member is housed in the cylinder on that side of the piston remote from the mould cavity and does not act on the pin when the latter is in its extended position. In this way the construction of the apparatus is greatly simplified.

The features of the invention will be apparent from a reading of the following description of the accompanying drawings, in which:

Fig. 1 is a sectional view of a preferred embodiment of an apparatus for biaxial-blow-moulding a hollow bottle-shaped container of a synthetic resin according to the present invention before a blow-moulding operation;

Fig. 2 is a sectional view of the apparatus after the bottle-shaped container is blow-moulded; and

Fig. 3 is a sectional view showing the state of the blow-moulded product when it is released from the opened split moulds.

In the drawings, reference numeral 1 designates a bottom mould. The upper surface of the bottom mould 1 becomes the bottom mould surface 2 to become the bottom of a product or a hollow bottle-shaped container A of a synthetic resin to be blow-moulded. The mould 1 has a cylinder chamber 3 formed therein and opened at the top end with the mould surface 2, and air intake and exhaust holes 4 and 4 formed at the upper and lower parts of the chamber 3.

Reference numeral 5 depicts a bottom protruding pin. The top surface of the pin 5 form part of the bottom mould surface 2. The lower end of the pin 5 is formed with a piston 6 which is reciprocated in the cylinder chamber 3. The piston 6 is moved back and forth by means of the intake and exhaust of air through the intake and exhaust holes 4 and 4. The pin 5 is arranged to hold lightly the bottom of a preformed injection-moulded piece of parison A′ to become the orienting center of the piece A′ between the pin 5 and the end face of an orientation pin 8 which is secured to the top of split moulds 9 for directly biaxial-blow-moulding the piece A′ in an axial direction. The pin 5 is displaced so as to be retracted into the cylinder chamber 3 together with the orientation pin. The top surface of the pin 5 becomes a smoothly continued surface with the bottom mould surface 2 when the pin 5 is retracted to the retraction limit in the cylinder chamber 3.

The piece A′ is suspended at the top from the neck portion moulding sections of the split moulds 9 in the cavity of the moulds 9. The pin 8 is inserted into the piece A′ in such a manner that the portion end of the pin 8 makes contact with the inner surface of the bottom wall of the piece A′. Thus, the piece A′ is axially oriented by pressing down the pin 8 in the cavity of the moulds 9.

Further, a coiled elastic member (spring) 7 is associated within the bottom of the chamber 3. The top end of the member 7 makes contact with the bottom of the piston 6 of the pin 5 in the vicinity of the retraction limit into the chamber 3. Thus, the elastic member 7 is operated to move forward elastically the piston 6, and hence the pin 5, towards the split moulds 9.

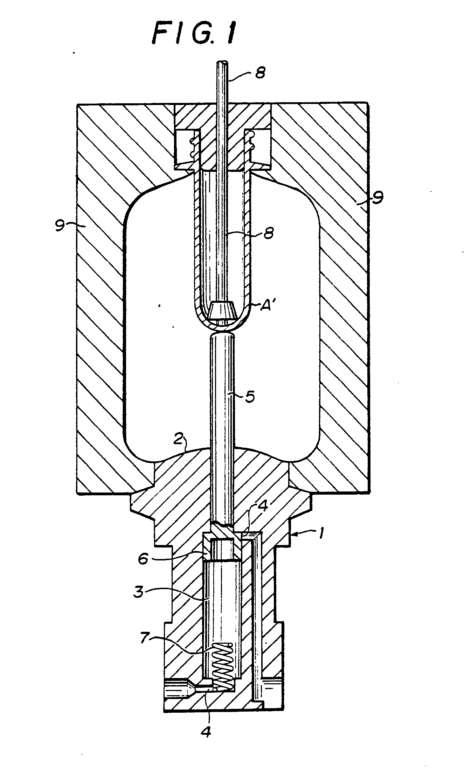

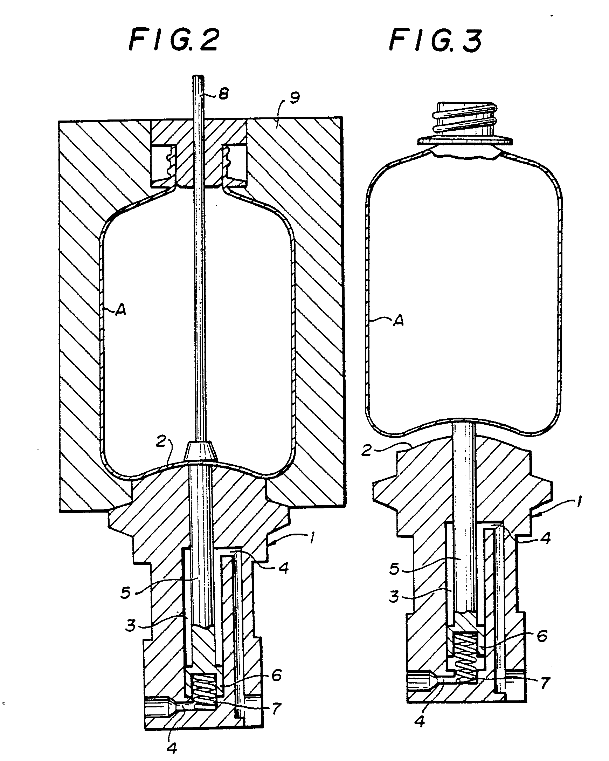

In the apparatus thus constructed as described above, when the piece A′ is loaded in the moulds 9 in the state that air is introduced from the lower hole 4 to move forwardly the pin 5 into the moulds 9, the moulds 9 are then clamped and are biaxially blow-moulded (from the state shown in Fig. 1), and the pin 5 is retracted synchronously with the pin 8 so that the pin 5 lightly holds the bottom of the piece A′ to become the orienting center between the pin 5 and the bottom end surface of the pin 8. In this manner, the piece A′ is blow-moulded in the moulds 9, thereby being blow-moulded into a bottle-shaped container A of a synthetic resin (as shown in Fig. 2).

The pin 5 is driven forwardly by the force of the elastic member 7 at the position in the vicinity of the retraction limit into the bottom mould 1, but is continuously retracted to the retraction limit by the pressure produced in the cavity of the moulds 9 at the blowing time and the continuous supply of the air into the cylinder chamber 3 (as shown in Fig. 2), thereby blow-moulding the bottle-shaped container A.

When the moulds 9 are opened after the container A is completely biaxially blow-moulded, the container A is forcibly released at the bottom from the bottom mould 1 by the application of the elastic force of the member 7 to the pin 5. In this manner, the container A thus blow-moulded can be readily released from the blowing mould.

Therefore, the pin 8 and the pin 5 should be displaced at a predetermined interval. An irregular thickness would, if otherwise, occur at the center of the bottom of the blow-moulded container A. In this manner, the elastic force of the member 7 in the vicinity of the retraction limit of the pin 5 must not be stronger than the pressure of the pin 8 in the cavity of the moulds 9, and the protrusion of the pin 5 after the blow-moulding by the member 7 may operate in the vicinity of the retraction limit of the pin 5 because the bottom of the container A thus blow-moulded may be released from the bottom mould surface 2.

According to the present invention as described above, the apparatus for biaxial-blow-moulding the hollow bottle-shaped container of synthetic resin is constructed to have the bottom protruding pin telescopically inserted into the bottom mould to prevent the displacement of the orienting center of the orientation pin at the bottom of the preformed piece at the blowing time so as to eliminate the irregular thickness of the bottle-shaped container. In addition, the elastic member arranged in the cylinder chamber of the bottom mould serves to engage the bottom protruding pin after the blow moulding of the container for slightly protruding the bottom protruding pin disposed at the retraction limit forwardly so as to readily release the bottom of the container from the bottom of the split moulds. The container can thus be readily released from the split moulds.

The release of the bottom of the blow-moulded bottle-shaped container is performed in the apparatus as described below:

In the method, the pin 5 is telescopically protruded into the space of bottle shape formed by the cavity of the clamped split moulds 9 through the bottom mould 1 along the central axis of the space, and the pin 5 is telescopically inserted into the cylinder chamber 3 formed in the mould 1.

In biaxial-blow-moulding of the bottle-shaped container A, the piece A' is suspended at the upper end from the neck portion forming sections of the split moulds 9 in the space formed by the cavity of the moulds 9, and the orientation pin 8 is inserted into the piece A' so that the lower end of the pin 8 makes contact with the inner surface of the bottom wall of the piece A'. Thus the piece A' is axially oriented by pressing down the pin 8. Prior to the depression of the pin 8, the bottom of the piece A' is held between the upper end face of the pin 5 and the bottom end surface of the pin 8, and both the pins 5 and 8 are simultaneously moved downwardly while maintaining the holding state of the bottom of the piece A'. In this manner the piece A' is axially oriented by extending the pin 8. After this axial orientation of the piece A' or at the downward movements of both the pins 5 and 8, compressed air is blown into the piece A' and it is laterally oriented. The compressed air may be blown into the piece A' between the outer peripheral surface of the pin 8 and the upper inner surface of the piece A' after the pin 8 is removed or in the state that the pin 8 is pressed into the space of the moulds 9.

## Claims

1. Apparatus for biaxial-blow-moulding a hollow bottle-shaped container (a) of a synthetic resin comprising:

(a) a bottom mould (1) having an upper surface (2) which forms the mould surface for the bottom of the container (A);

(b) an axially-movable pin (5) extending through a hole in the bottom mould and having an upper end face adapted to form part of the bottom mould surface (2) of the bottom mould (1) when the pin is in a retracted position;

(c) a spring or other resilient member (7) arranged to act on that end of the pin (5) remote from the mould cavity so as to urge the pin into a position where it protrudes beyond the upper surface (2) of the bottom mould (1) into the mould cavity; and

(d) a piston (6) which is mounted for reciprocation in a cylinder (3) provided in the bottom mould (1), the cylinder (3) having air intake and exhaust holes (4, 4) in the bottom mould (1) at locations on either side of the piston so as to move the piston under pneumatic pressure;

characterised in that the piston (6) is provided on the end of the pin (5) remote from the mould so that the pin moves with the piston, and that the spring or other resilient member (7) is housed in the cylinder (3) on that side of the piston (6) remote from the mould cavity and does not act on the pin when the latter is in its extended position (Figure 1).

2. Apparatus according to claim 1, characterised in that the bottom mould (1) is formed in one piece.

3. Apparatus according to claim 1 or claim 2, characterised in that the piston (6) is an integral part of the pin (5).

## Patentansprüche

1. Vorrichtung zum biaxialen Blasformen eines hohlen flaschenförmigen Behälters (A) aus einem Kunstharz, mit

(a) einer Bodenform (1) mit einer oberen Fläche (2), die die Formfläche für den Boden des Behälters (A) bildet;

(b) einem axial beweglichen Stift (5), der sich durch eine Öffnung in der Bodenform erstreckt und eine obere Stirnseite aufweist, die einen Teil der Fläche (2) der Bodenform (1) bilden kann, wenn sich der Stift in seiner zurückgezogenen Stellung befindet;

(c) einer Feder oder einem anderen federnden Element (7), das derart auf das vom Formhohlraum fernliegende Ende des Stiftes (5) einwirken kann, dass dieser in eine Stellung gedrückt wird, in welcher er jenseits der oberen Fläche (2) der Bodenform (1) in den Formhohlraum hineinragt; und

(d) einem Kolben (6), der in einem in der Bodenform (1) vorgesehenen Zylinder (3) hin und her beweglich befestigt ist, wobei der Zylinder (3) eine Lufteinlass- und Luftauslassöffnung (4, 4) in der Bodenform (1) an Bereichen beiderseits des Kolbens aufweist, damit der Kolben unter Luftdruck bewegbar ist;

dadurch gekennzeichnet, dass der Kolben (6) an dem von der Form abgewandt liegenden Ende des Stiftes (5) angeordnet ist, so dass sich der Stift mit dem Kolben bewegt, und dass die Feder oder das andere federnde Element (7) im Zylinder (3) auf der vom Formhohlraum abgewandten Seite des Kolbens (6) aufgenommen wird und nicht auf den Stift einwirkt, wenn sich dieser in seiner ausgefahrenen Stellung (Fig. 1) befindet.

2. Vorrichtung nach Anspruch 1, dadurch gekennzeichnet, dass die Bodenform (1) einstückig ausgebildet ist.

3. Vorrichtung nach Anspruch 1 oder 2, dadurch gekennzeichnet, dass der Kolben (6) einstückig mit dem Stift (5) ausgebildet ist.

**Revendications**

1. Appareil de moulage par soufflage biaxial d'un récipient (A) en forme de bouteille en résine synthétique, comprenant:

(a) un moule de fond (1) présentant une surface supérieure (2) qui forme la surface du moule pour le fond du récipient (A);

(b) une broche (5) mobile axialement, passant dans un trou du moule de fond et présentant une face extrême supérieure conçue pour former une partie de la surface (2) du moule de fond. (1) lorsque la broche est dans une position rétractée;

(c) un ressort ou autre organe élastique (7) disposé de façon à entrer en contact avec l'extrémité de la broche (5) éloignée de la cavité du moule afin de rappeler la broche vers une position dans laquelle elle dépasse de la surface supérieure (2) du moule de fond (1) dans la cavité du moule; et

(d) un piston (6) qui est monté de façon à exécuter un mouvement alternatif dans un cylindre (3) prévu dans le moule de fond (1), le cylindre (3) ayant des trous (4, 4) d'admission et d'échappement d'air dans le moule de fond (1), en des emplacements situés de chaque côté du piston afin de déplacer le piston sous une pression pneumatique;

caractérisé en ce que le piston (6) est prévu sur l'extrémité de la broche (5) éloignée du moule afin que la broche se déplace avec le piston, et en ce que le ressort ou autre organe élastique (7) est logé dans le cylindre (3) sur le côté du piston (6) éloigné de la cavité du moule et n'agit pas sur la broche lorsque cette dernière est dans sa position d'extension (figure 1).

2. Appareil selon la revendication 1, caractérisé en ce que le moule de fond (1) est formé d'une seule pièce.

3. Appareil selon la revendication 1 ou la revendication 2, caractérisé en ce que le piston (6) fait partie intégrante de la broche (5).

FIG. 1

FIG.2   FIG.3